Europäisches Patentamt

European Patent Office

Office européen des brevets

(19)

(11) **EP 0 979 019 A1**

(12) **DEMANDE DE BREVET EUROPEEN**

(43) Date de publication:
**09.02.2000 Bulletin 2000/06**

(51) Int Cl.⁷: **H04Q 7/38**

(21) Numéro de dépôt: **99401923.0**

(22) Date de dépôt: **27.07.1999**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **04.08.1998 FR 9810231**

(71) Demandeur: **SAGEM SA**
**75783 Paris Cédex 16 (FR)**

(72) Inventeur: **Pite, Eric**
**95000 Cergy (FR)**

(74) Mandataire: **Schmit, Christian Norbert Marie**
**Cabinet Christian Schmit et Associes,**
**8, place du Ponceau**
**95000 Cergy (FR)**

(54) **Procédé de localisation d'un téléphone mobile**

(57) Pour permettre la localisation d'un téléphone mobile dans un réseau de stations de base on prévoit que le téléphone mobile entreprendra un échange avec une station de base. Dans cet échange, cette station de base lui communique (h1) une heure absolue (H1) de manière que le téléphone mobile puisse se repérer temporellement par rapport à cette heure absolue. Au cours de cet échange la première station de base transmet par ailleurs au téléphone mobile une information ($\tau$1) relative à la distance qui les sépare. Puis au moins deux autres stations de base émettent des heures absolues (H2, H3), différentes, qui sont exploitées par le téléphone mobile pour calculer par triangulation sa position dans le réseau.

Fig. 3

## Description

La présente invention a pour objet un procédé de localisation d'un téléphone mobile dans un réseau de stations de base. Elle a pour objet d'offrir des possibilités nouvelles d'utilisation des téléphones mobiles et de perfectionner les systèmes de radiocommunications.

Dans le domaine de la téléphonie mobile il s'avère de plus en plus nécessaire de localiser, de repérer les téléphones mobiles en cours de conversation et même éventuellement en permanence. Dans la pratique une organisation américaine, la FCC (Federal Communications Commission), prévoit que le repérage des téléphones mobiles sera effectué avec une précision meilleure que 125 mètres, et ce pendant au moins 67 % du temps. Autrement dit, la localisation devient une nécessité pour les radiotéléphones mobiles des futures générations.

Brièvement, la localisation des téléphones mobiles permet de repérer un téléphone mobile, en cours d'utilisation, lorsqu'il a été volé. Elle peut donner des indications pour retrouver le voleur. Par ailleurs en cas d'urgence le seul fait de communiquer sa localisation peut permettre à des secours d'intervenir auprès de l'utilisateur. Plus généralement, la localisation géographique permet de dispenser aux utilisateurs des messages, éventuellement publicitaires, en relation avec l'endroit où ils se trouvent.

Les procédés de localisation envisageables comportent l'installation dans chaque téléphone mobile d'un détecteur de type GPS (Global Positionning System) par lequel le téléphone mobile capterait des émissions en provenance de satellites pour connaître sa position. Bien que cette technique soit tout à fait au point, il ne semble pas envisageable pour des raisons de coût, au jour d'aujourd'hui, de l'installer dans les téléphones mobiles. En effet elle nécessite des équipements spécifiques.

D'autres solutions envisageables sont décrites dans le document «Positionning Systems in Intelligent Transportation Systems» dû à Messieurs Chris DRANE et Chris RIZOS et publié par Artech House Book, BOSTON LONDON, 1998 31 janvier. Il y est envisagé d'effectuer des localisations par angle d'arrivée. Ce système nécessite cependant la réalisation d'aériens multiples permettant, par la discrimination des signaux radioélectriques reçus sur plusieurs lobes de désigner une direction de provenance des émissions reçues. A partir d'au moins trois directions (à partir d'au moins trois stations de base), il est possible de repérer la position du téléphone mobile qui émet. Cette solution présente l'inconvénient que des aériens nombreux et encombrants doivent être installés, pour chaque station de base, en façade des maisons. Ceci n'est pas toujours réalisable notamment pour des questions ornementales. En outre dans ce cas, le mobile ne peut pas se localiser, il doit émettre pour que les stations de base le localisent.

Une deuxième solution envisagée est une mesure de temps. A partir d'une mesure de date d'arrivée de signaux radioélectriques sur une station de base ou un téléphone mobile, on peut déterminer en théorie l'éloignement d'un téléphone mobile d'une station de base. En combinant des informations d'éloignement du téléphone mobile de plusieurs stations de base, on peut déterminer la localisation de ce téléphone mobile.

Dans l'état actuel de la technique, une mesure de temps d'arrivée est déjà effectuée par une station de base, dans des équipements existants. Cette mesure a pour but de faire en sorte que des émissions provenant d'un téléphone mobile arrivent à cette station de base d'une manière synchronisée avec la trame de réception de cette station de base. Ainsi, notamment dans le cadre de la téléphonie mobile de type GSM, dans une trame de 4,6 millisecondes on distingue huit fenêtres temporelles de 577 microsecondes. Compte tenu, qu'une cellule géographique, gouvernée par une station de base, peut avoir une dimension de 30 kilomètres de diamètre, la distance de propagation maximale envisagée pour la propagation d'une onde est de l'ordre de 30 Km. Pour une propagation à la vitesse de la lumière, ceci conduit à des retards de phase, allant jusqu'à 300 microsecondes. Ce qui est significatif par rapport à la durée des fenêtres temporelles. De façon à obtenir à l'endroit d'une station de base une présence des bits significatifs pendant des micro-fenêtres de 5 microsecondes (correspondant à une bande passante de canal de 200 KHz) on a prévu une mesure des temps d'arrivée selon soixante niveaux de retard, dans la pratique 64 niveaux.

Pour un mobile très proche de la station de base le retard temporel sera nul. Pour un mobile éloigné, le retard temporel, et donc une avance d'émission TA, devra correspondre à 300 microsecondes. Pour communiquer au mobile la durée d'avance d'émission TA à mettre en oeuvre, une station de base lui envoie un message de TA codé sur 6 bits (pour 64 niveaux) permettant de déterminer cette avance.

En pratique, cette avance étant synonyme d'une durée de propagation, elle est également synonyme d'un éloignement du mobile de la station de base dans 64 couronnes concentriques autour de celle-ci : c'est-à-dire avec des largeurs d'environ 1100 mètres. Bien que la précision ainsi obtenue ne soit pas insignifiante, elle n'est pas suffisante pour correspondre aux exigences de la norme. En définitive, l'utilisation de l'information TA représentative de cette avance à l'émission n'est pas exploitable pour localiser le téléphone mobile avec suffisamment de précision. Une modification de cette technique consistant à augmenter la précision de l'information TA aurait par ailleurs l'inconvénient de devoir modifier, technologiquement, toutes les stations de base et tous les téléphones mobiles : c'est irréaliste.

L'invention a pour objet de remédier à ces inconvénients c'est-à-dire de permettre une localisation effective, avec des matériels existants ne nécessitant pas de modifications technologiques, et ayant dans les conditions actuelles la précision requise. La solution de l'invention consiste dans son principe à envoyer un message à partir d'une station de base, à un téléphone mobile. Ce message comporte une information d'une heure absolue relative à cette station de base. Le téléphone mobile qui reçoit le message sait, par rapport à son horloge propre, quand il reçoit ce message. Il sait aussi comment il doit par ailleurs tenter de recaler son horloge interne pour qu'elle corresponde à l'horloge absolue dont on vient de lui communiquer les caractéristiques. Cette communication d'heure absolue est cependant entachée d'une erreur due à la durée de propagation entre la station de base et le téléphone mobile.

Dans l'invention, le téléphone mobile envoie alors un message de réponse à la station de base qui lui a envoyé l'heure absolue. Celle-ci reçoit ce message de réponse. Sur la base des deux durées de propagation à l'aller et au retour, entre elle et le téléphone mobile, la station de base calcule une correction d'heure absolue correspondante. Dans un deuxième envoi, la station de base envoie au téléphone mobile des informations relatives à cette correction. En recevant cette information de correction, le téléphone mobile cale, définitivement cette fois, son horloge interne par rapport à l'heure absolue de la station de base.

La correction à apporter correspondant à la durée de propagation, et à la distance le séparant de la station de base, le téléphone mobile connaît son éloignement par rapport à celle-ci. A partir d'au moins deux autres stations de base, on émet des mêmes messages d'heure absolue, à des dates absolues différentes ou les mêmes. Ces messages d'heure absolue sont également reçus par le téléphone mobile. Dans l'invention on fait en sorte que les messages d'heure absolue communiqués par les stations de base soit relatifs à une heure absolue unique, au moins connue de ces autres stations de base et/ou du téléphone mobile. A défaut, on synchronise les stations de base. Dans ces conditions le téléphone mobile peut calculer ou faire calculer sa position.

L'invention a donc pour objet un procédé de localisation d'un téléphone mobile dans un réseau de stations de base comportant les étapes suivantes :

- on repère une première, une deuxième et une troisième station de base,
- on mesure respectivement une première, une deuxième et une troisième durée de propagation entre la première, la deuxième et la troisième station de base et le téléphone mobile,
- on en déduit des distances entre cette première, cette deuxième et cette troisième station de base et le téléphone mobile, et
- on localise le téléphone mobile avec ces distances et avec ces repères des stations de base,

    caractérisé en ce que

- on fait connaître une même horloge absolue pour caler les stations de base,
- la première station de base envoie une première information h1 de date absolue au téléphone mobile, cette première information h1 correspondant à une première date absolue H1 pour cette première station de base,
- le téléphone mobile reçoit cette première information h1 de date absolue et émet, après une durée d'attente connue de la première station de base, un signal de réponse,
- la première station de base reçoit ce signal de réponse à une autre date H'1 absolue,
- la première station de base calcule une information de propagation τ1 entre elle et le mobile sur la base de la différence des deux dates absolues H1 et H'1 et de la durée connue d'attente,
- la première station de base envoie au téléphone mobile l'information de propagation τ1,
- la deuxième et la troisième station de base envoient une deuxième et une troisième information h2 et h3 de date absolue, et
- on localise le mobile à partir de ces informations h1, h2, h3 de date absolue reçue par le téléphone mobile, de leur date de réception, et de l'information de propagation.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

- Figure 1: la représentation schématique de la disposition d'un téléphone mobile dans un réseau de stations de base par rapport auquel il doit être repéré ;
- Figure 2: un organigramme des étapes essentielles du procédé de localisation de l'invention ;
- Figure 3 : des diagrammes temporels de signaux échangés, selon le procédé de la figure 2, entre le téléphone mobile et chacune des stations de base;
- Figure 4: la modification, minime, de la structure des téléphones mobiles pour leur permettre de mettre en oeuvre le procédé de l'invention ;
- Figure 5: une représentation schématique d'un perfectionnement de l'invention dans le cas où la technique d'accès radioélectrique serait de type CDMA.

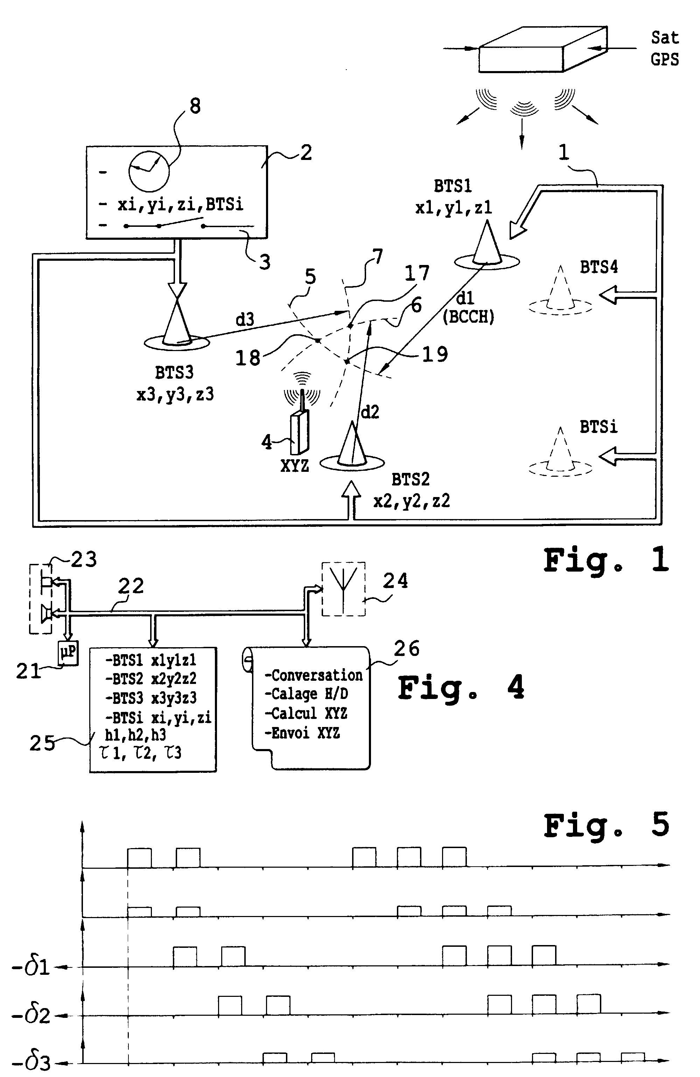

La figure 1 montre un réseau de stations de base utilisable pour mettre en oeuvre le procédé de localisation d'un téléphone mobile selon l'invention. Le réseau comporte par exemple les stations de base BTS1, BTS2 et BTS3. Ces stations de base forment un réseau et sont reliées, schématiquement par un bus 1, entre elles et à un circuit central 2 du réseau. Les stations de base BTS1 à BTS3 sont toutes repérées par leurs coordonnées géodésiques, schématiquement représentées ici par des coordonnées à trois dimensions xi, yi, zi dans un repère astronomique non représenté. Ce repérage peut par ailleurs être converti en des repères de latitude, de longitude et d'altitude. Dans la pratique, le circuit central 2 pourra comporter dans une mémoire des informations xi, yi, zi en correspondance d'une station de base BTSi quelconque. Le circuit central 2 est normalement chargé d'effectuer une commutation 3 pour permettre à des interlocuteurs d'échanger des conversations entre eux en utilisant le réseau de téléphonie mobile.

Un téléphone mobile 4 dont les coordonnées X, Y, Z sont inconnues, doit être localisé par rapport aux stations de base BTS1 à BTS3. D'une manière théoriquement connue, on va d'abord évaluer dans l'invention des informations représentatives des distances d1, d2 et d3 qui séparent le téléphone mobile 4 de chacune des stations de base. Par une triangulation, symboliquement représentée par des contours en tirets 5, 6 et 7, on peut ensuite retrouver la position du téléphone mobile 4 à partir de ces informations. Ces calculs théoriques sont décrits dans l'article cité ci-dessus ainsi que dans l'article «An Overview of the Challenges and Progress in Meeting the E911 Requirement for Location Service» dû à Messieurs J. H. REED, et AI. et paru dans la revue IEEE Communications Magazine, avril 1998. Il y est décrit des calculs permettant de connaître les coordonnées X, Y, Z à partir des coordonnées xi, yi, zi.

Selon une caractéristique essentielle de l'invention on fait connaître une même horloge absolue aux stations de base. Cette connaissance peut être apportée de plusieurs façons. Soit chaque station de base BTS1 à BTS3 (ou BTS4 ou BTSi s'il y en a d'autres) reçoit les émissions d'un satellite SAT du système GPS (ou d'un autre système de localisation satellitaire ; par exemple GLONASS, EGNOS ou autre) qui lui transmet en permanence une heure d'une horloge absolue. Cette heure absolue est la même car le satellite SAT est loin de la terre et que des stations de base concernées sont proches les unes des autres (au moins sur la terre ferme). Soit encore chaque station de base est reliée à une horloge commune ou possède une horloge atomique, ou d'une autre façon.

D'une manière plus simple, le circuit central 2 possédera un circuit 8 communicant à chaque station de base une heure absolue. Le circuit 8 communiquera en fait à chaque station de base une heure absolue prenant déjà en compte une distance séparant ces stations de base du circuit 2. Les informations d'heures égrenées leur sont communiquées par le bus 1 notamment. Le bus 1 utilise par exemple dans ce but un protocole de type MIC. Par exemple, pour une station de base proche, BTS3, une information d'heure absolue 09 heures, 00 minutes, 00 secondes, est communiquée à une date absolue 09 heures, 00 minutes, 00 secondes, alors qu'elle est communiquée, une station de base éloignée, BTS1, à une date antérieure, par exemple 08 heures, 57 minutes, 49 secondes. De cette façon on s'assure que toutes les stations de base reçoivent régulièrement à une date absolue considérée (09 heures, 00 minutes, 00 secondes) une indication correspondant à cette date. On verra par la suite une autre façon de faire connaître (au téléphone mobile cette fois) une même heure absolue pour les stations de base.

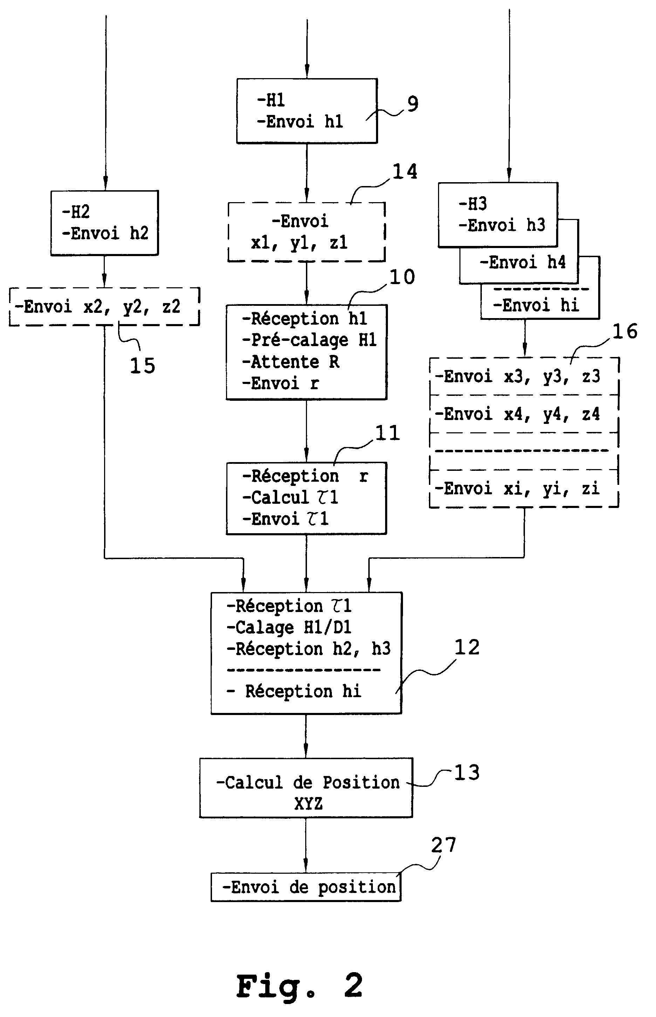

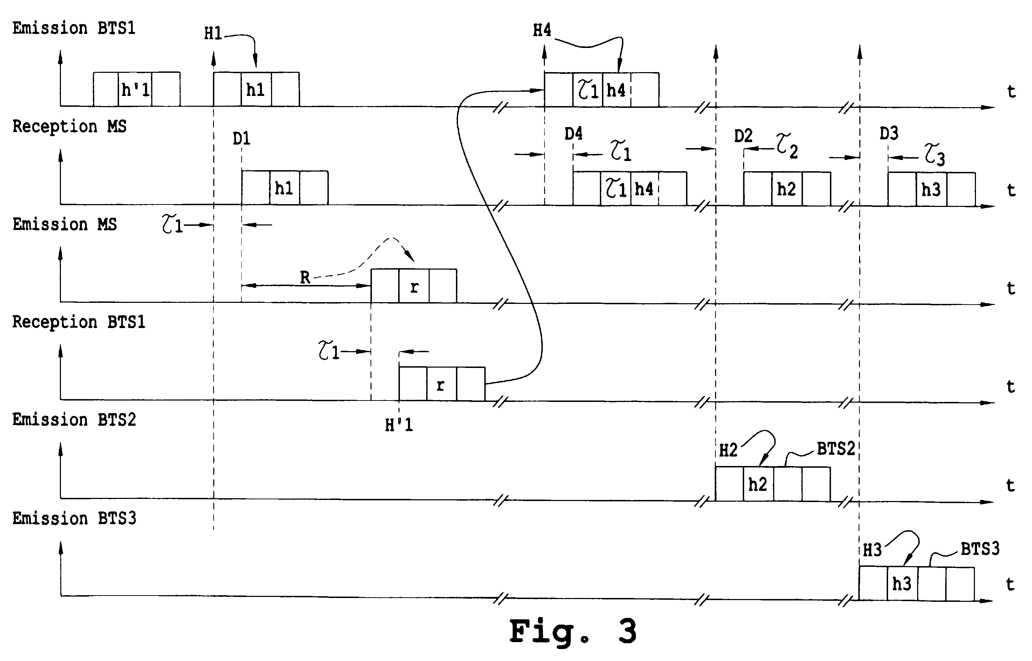

Comme deuxième caractéristique de l'invention, on fait parvenir par la première station de base BTS1 une première information représentative de l'heure absolue au téléphone mobile 4. Cet envoi est matérialisé sur la figure 2 et par les chronogrammes de la figure 3. Dans une première étape 9, figure 2, on élabore à une date absolue H1 (relative à la station de base BTS1), une information h1 représentative de cette date H1. On l'envoie au téléphone mobile à partir de la station de base BTS1. Ceci est représenté sur la première ligne des chronogrammes de la figure 3. Bien entendu la préparation de l'information h1 peut anticiper le moment H1 de l'envoi. Ce qui compte néanmoins est que le début de l'envoi s'effectue dans le temps à la date H1, ou à une date repérée par rapport à H1. Compte tenu d'un temps de propagation $\tau1$ (inconnu au début) correspondant à la distance d1 entre la station de base BTS1 et le mobile 4, le mobile 4 reçoit le message envoyé avec un retard $\tau1$.

Il le reçoit à une date relative D1. La date D1 est mesurée par rapport à l'horloge interne du téléphone mobile 4. Au cours de l'étape 10 de réception, le téléphone mobile 4 qui a reçu l'information h1 et qui a mesuré la date relative D1 peut effectuer un précalage de son horloge par rapport à l'horloge absolue H1. Ce précalage n'est pas véritablement nécessaire un calage total pouvant être effectué par la suite.

Puis le téléphone mobile attend une durée d'attente R. On verra par la suite que la durée d'attente peut être différente d'une situation à l'autre, notamment si le téléphone mobile doit, pour des raisons de synchronisation évoquées ci-dessus, renvoyer un message pour que celui-ci arrive très précisément dans une fenêtre temporelle qui lui est allouée par le protocole de la station de base. Pour l'essentiel cette durée d'attente R est représentative d'un retard technologique (en plus de l'attente de synchronisation) nécessaire au téléphone mobile pour émettre une réponse dès qu'il reçoit un tel signal.

Cette durée d'attente peut être quelconque (éventuellement même nulle). Ce qui compte c'est qu'elle soit connue précisément de la station de base à laquelle le message de réponse va être destiné. Eventuellement, comme montré dans le deuxième chronogramme de la figure 3, le signal de réponse du téléphone mobile peut comporter une information r représentative de la durée R d'attente, si celle-ci a été modifiée par rapport à une durée précise. Dans la suite de l'exposé la durée R tient compte de l'attente de synchronisation relative à l'information TA.

Comme le téléphone mobile 4 envoie le message de réponse, comportant éventuellement l'information r, ce message est reçu à une date H'1 par la station de base BTS1. Une étape 11 de réception correspondante permet alors à la station BTS1 de calculer la durée de propagation $\tau 1$. En effet, les différentes dates H'1 - H1 correspondent à deux fois $\tau 1$ et à la durée d'attente R. L'étape 11 se termine alors par l'envoi de l'information $\tau 1$ (ou d'une information correspondante) de la station de base BTS1 au téléphone mobile 4. L'information $\tau 1$ peut être envoyée en même temps qu'une information complémentaire d'heure absolue H4 représentée par une information h4 contenue dans le message de renvoi. Comme on le verra par la suite cette deuxième heure absolue est optionnelle. Elle permet au téléphone mobile d'apprécier la dérive de son horloge interne par rapport à l'horloge absolue 8 communiquée par la station de base BTS1.

Au cours d'une étape 12 suivante, le téléphone mobile 4 reçoit alors l'information $\tau 1$ correspondant au deuxième envoi par la station de base BTSI. A partir de cette information $\tau 1$ le téléphone mobile est capable d'effectuer un calage rigoureux de sa date relative D1 par rapport à la date absolue H1. En pratique, il doit faire en sorte qu'une information h1 + $\tau 1$ soit égale à une information représentative de son heure relative D1.

Cette connaissance de $\tau 1$permet déjà au téléphone mobile 4 de savoir quelle distance d1 le sépare de la station de base BTS1. Par ailleurs le calage lui donne une information de calage de l'heure absolue.

L'opération 12 se poursuit, ou s'effectue en même temps, par la réception de l'envoi de messages provenant d'au moins deux autres stations de base BTS2 et BTS3. Par exemple la station de base BTS2 émet un message à une date absolue H2 contenant une information h2 relative à cette date absolue H2. Ce message de la station de base BTS2 est reçu par le mobile à une date relative D2. De même une troisième station de base BTS3 émet à une date H3 un message comportant l'information h3 reçu à une date relative D3 par le téléphone mobile 4. Les dates absolues H2 et H3 sont élaborées par rapport à une même horloge absolue connue des stations de base BTS2 et BTS3 et correspondant exactement à celle de la station de base BTS1. Par exemple cette horloge absolue est produite, pour toutes les stations de base par l'horloge 8.

On peut alors écrire les résultats suivants :

$$H1 = D1 + \Delta - \tau 1$$

$$H2 = D2 + \Delta - \tau 2$$

$$H3 = D3 + \Delta - \tau 3$$

Dans ces expressions $\Delta$ représente le décalage de l'horloge relative du téléphone mobile 4 par rapport à l'horloge absolue de la station de base BTSI. L'horloge absolue de la station de base BTSI est connue par les autres stations de base BTS2 et BTS3. Par exemple cette connaissance est assurée par le bus 1 qui leur transmet des informations d'heures.

Des étapes 9 à 11, on peut déduire que, $\tau 1$ étant connu par calcul au moins au cours de l'étape 11 dans la station de base BTSI, que A est également connu. Dans ces conditions, en application des deuxième et troisième formules citées ci-dessus la connaissance de D2 et de D3 (ainsi que H2 et H3 représentés par h2 h3) permet de calculer directement $\tau 2$ et $\tau 3$. On se trouve alors dans une configuration représentée sur la figure 1 et relative aux énoncés de l'état de la technique. On peut alors calculer facilement les coordonnées X, Y, Z.

Le calcul 13 de sa position X, Y, Z peut être effectué par le téléphone mobile 4 dans un mode préféré. Dans ce cas il est nécessaire que le téléphone mobile 4 connaisse par ailleurs les coordonnées des stations de base BTS1, BTS2 et BTS3. Dans ce but, postérieurement (ou antérieurement) à l'étape 9 d'envoi de l'information h1, la station de base BTS1 peut envoyer dans une étape 14 les informations x1, y1, z1 correspondant à ses coordonnées. De même les stations BTS2 et BTS3 peuvent envoyer des informations du même type au cours d'étapes 15 et 16 respectivement, antérieures à l'opération 13.

Normalement le téléphone mobile est en relation privilégiée avec une station de base selon un canal alloué. Notamment dans le système GSM, ce canal alloué comporte une fenêtre temporelle et, pour chaque fenêtre temporelle, une fréquence de travail. Par ailleurs d'une trame à une autre, pour une même fenêtre temporelle, la fréquence de travail change selon un mode pseudo-aléatoire connu de la station de base et du téléphone mobile.

D'une manière préférée, l'envoi de l'heure absolue par la station de base BTSI au téléphone mobile se produira dans le canal privilégié de conversation. Eventuellement, le nombre de bits nécessaires pour transmettre la valeur d'une heure absolue H1 pouvant être important, il peut être envisagé, figure 3 chronogramme du haut, d'envoyer une information relative à une heure absolue H1 sous la forme d'informations fragmentaires h1, h'1, etc. au cours de plusieurs trame successives. Dans ce cas le téléphone mobile comportera un protocole (un programme) avec lequel il sera capable de connaître la date H1 au moment où il reçoit une information particulière (la dernière) de ces informations fragmentaires. Par exemple ces différentes informations fragmentaires sont codées sur des nombres de bits différents. Une première information fragmentaire représentant une heure absolue modulo 8 est codée sur trois bits. Une seconde partie codée sur six bits représente une minute dans cette heure, une troisième partie sur six bits représentant une seconde particulière dans cette minute et ainsi de suite, les bits de poids faibles contenant la précision requise (au moins de l'ordre de la microseconde). On peut ainsi, avec trente bits, descendre à une précision de l'ordre de la nanoseconde.

Une autre façon pour un téléphone mobile de connaître la position xi, yi, zi des stations de base est de transmettre ces informations xi, yi, zi au téléphone mobile, au moment où il arrive dans un environnement de stations de base, en correspondance de l'identification BTSi, relative à ces stations de base. Dans ce cas, le message de transmission des informations d'heure absolue comportera au lieu de coordonnées xi, yi, zi une information d'identification de la station de base sachant que le téléphone mobile connaît les coordonnées de celle-ci par ailleurs.

Pour améliorer par ailleurs le calcul de la position du téléphone mobile il est envisageable, notamment en environnement urbain où le nombre de stations de base recevables par un téléphone mobile est important, d'effectuer un calcul de moyennage de positions, notamment un calcul d'extraction par les moindres carrés. Dans ce cas on fera notamment intervenir des stations de base complémentaires notamment BTS4, BTSi et ainsi de suite. En environnement urbain, le nombre de station de base est élevé non seulement à cause des difficultés de propagation mais surtout à cause du nombre de communications simultanées qui doivent être assurées en même temps et qui nécessite la réalisation de stations de base multiples, disséminées avec une densité importante.

Chacune des stations de base, tout en communiquant avec un lot de téléphones mobiles attribués, possède par ailleurs un canal de signalisation pour diffuser en permanence ou de façon périodique des signaux de signalisation. Ce canal de signalisation (dit BCCH - Broadcast Control CHannel - dans la norme GSM par exemple) permet d'effectuer notamment les incorporations des mobiles entrant dans le domaine de la station de base. Cette incorporation nécessite un trafic au moins partiel du mobile entrant dans le canal BCCH, sur une fréquence de balise, avant l'allocation d'un canal de conversation spécifique. Ce trafic partiel comporte généralement la diffusion de l'information TA à l'adresse du mobile entrant. Celui-ci cale alors son horloge interne en synchronisation pour que ses réponse soient reçues dans une fenêtre qui lui est allouée, et avec un niveau d'émission convenable.

Dans l'invention on utilisera l'existence de ce canal de signalisation BCCH pour faire transmettre par les autres stations de base, BTS2, BTS3, BTS4, BTSi, périodiquement les messages hi et date absolue Hi. D'une manière connue ces messages d'heure absolue seront complétés par une information relative à l'identité de la station de base qui émet le message. D'une manière connue les différents canaux de signalisation BCCH sont situés dans des bandes de fréquence de balise différentes. Les téléphones mobiles possèdent alors des multi-récepteurs capables de recevoir ensemble toutes les émissions de ces stations de base sur leurs canaux de signalisation.

Une information de ce type est déjà utilisée dans l'état de la technique, notamment pour signaler au circuit central 2 de gestion qu'il y a lieu de faire cesser la communication entre un téléphone mobile et une station de base. Il faut la transférer à une autre station de base que celle qui le gérait précédemment, du fait de la dégradation (du fait de l'éloignement) des conditions de communication de ce téléphone mobile avec cette station de base. Ceci implique que, dans la pratique, les téléphones mobiles sont capables de recevoir autant de messages (utilisables pour leur localisation) de stations de base qu'ils sont capables de capter des canaux de signalisation.

La figure 1 montre ainsi qu'à partir de trois stations de base BTSI à BTS3 on peut déterminer un triangle de sommet 17, 18, 19 dans lequel se trouve le téléphone mobile 4. On peut par ailleurs admettre que la position officielle du téléphone mobile 4 sera celle du centre de gravité de ce triangle : le point de concours des médianes ce triangle. Si on fait intervenir une autre station de base, par exemple la station de base BTS4, on peut calculer les coordonnées X Y Z en retenant celles pour lesquelles la distance candidate à une station de base, diminuée de la distance mesurée di, élevée au carré, et additionnée aux différences, au carré, relatives aux autres stations de base est minimale. Dans ce cas on obtient une précision bien plus grande.

La figure 4 montre d'une manière schématique le contenu d'un téléphone mobile utilisable dans le procédé de l'invention. Celui-ci comporte essentiellement un microprocesseur 21 en relation, par un bus 22, avec une interface d'échange 23 (représentant symboliquement un microphone et un haut-parleur), un circuit d'émission 24, une mémoire de travail 25 et une mémoire programme 26. La mémoire programme 26 comporte essentiellement, d'une manière connue, un programme de conversation permettant à l'utilisateur du téléphone mobile d'établir des communications avec d'autres interlocuteurs.

Selon l'invention le programme 26 comportera un sous-programme de calage de l'horloge relative D par rapport à l'horloge absolue H. Il comportera également un sous-programme de calcul des coordonnées X, Y, Z. D'une manière préférée il comportera également un sous-programme d'envoi de ces coordonnées X, Y, Z, au cours d'une étape 27 (figure 2) au circuit central 2 de gestion du réseau. Cette communication des coordonnées X, Y, Z permettra notamment de retrouver quelqu'un en difficulté, de localiser un poste téléphonique volé, ou de transmettre à l'utilisateur des messages relatifs à la zone géographique dans laquelle il se trouve. La communication 27 peut être effectuée sur la base d'une requête émanant du circuit central 2, notamment quand ce dernier interprète un appel de détresse.

Dans la mémoire 25, on aura stocké notamment des informations relatives à l'identité BTSi des dernières stations de base avec lesquelles le téléphone mobile a été en relation, en correspondance de leur repérage xi, yi, zi. La mémoire de travail 25 comportera également les informations hi reçues ainsi que les résultats de calcul des durées de propagation τi calculées.

Dans la pratique, dans le cadre du GSM avec des canaux de transmission de signalisation de largeur de 200 KHz, et en utilisant une modulation de type GMSK (Gaussian Minimum Shift Keying), le débit binaire de la modulation est d'environ 270,833 kilobits par seconde. La précision de mesure des dates D1, D2, D3, etc. est proportionnelle à la durée d'un temps de bit. En effet, les circuits électroniques des appareils sont conçus pour mesurer des différences d'état. Ces différences d'état sont censées se maintenir pendant une durée : pour simplifier cette durée est la durée du bit. Autrement dit quand on mesure un état on ne sait pas si on se trouve au début de la durée du bit ou à la fin de la durée du bit. Typiquement, les systèmes actuels fournissent une précision de l'ordre d'un quart du temps de bit. Avec le débit binaire annoncé pour le GSM, ceci permet d'obtenir une précision pour les dates Di de l'ordre de la microseconde. Ceci conduit à une erreur d'appréciation des distances d1 à d3, chacune, de 300 mètres.

Cette précision, tout en étant supérieure aux précisions qu'il est possible d'obtenir avec les systèmes de type TA de l'état de la technique qui était de l'ordre de 1100 mètres peut n'être pas suffisante. Comme vu ci-dessus, on peut l'augmenter en augmentant le nombre de stations de base contribuant à la détermination des coordonnées X, Y, Z. Cependant, un nombre important de stations de base contribuant à cette mesure n'est pas toujours envisageable. De plus les seuls endroits où un nombre important de stations de base est envisageable sont les environnements urbains où se pose le problème des multi-trajets.

Le problème des multi-trajets résulte des réflexions et des diffusions des ondes émises par les stations de base et les téléphones mobiles sur les obstacles présents dans leur environnement (bâtiments, collines, etc.) avant d'aboutir à leur destinataire, le téléphone mobile ou la station de base. Ces trajets multiples introduisent de l'interférence entre symbole (IES). Bien qu'aucun système ne soit spécifié dans la norme GSM pour combattre cette interférence, la plupart des récepteurs, sinon tous, utilise un égaliseur de Viterbi. L'inconvénient d'un égaliseur de Viterbi est qu'il ne permet pas de savoir quel est le plus court chemin emprunté par les ondes reçues. Le plus court chemin est en définitive représentatif des distances di recherchées.

Dans le domaine de la téléphonie mobile de type CDMA, Coded Division Multiple Access, en simplifiant, on multiplie les séquences de bits à transmettre par une séquence très rapide (en pratique au moins dix fois plus rapide que pour le GSM) de type pseudo-aléatoire et dont la répartition est connue. Ces caractéristiques essentielles d'un codage CDMA sont donc d'une part une émission continue et d'autre part des fréquences de modulation bien plus élevées que celles du mode GSM. La multiplication de l'information à transmettre par la séquence pseudo-aléatoire, à débit très rapide, constitue dans les faits un taux de modulation à fréquence bien plus élevée que le taux de modulation utilisable en GSM. Dans ces conditions, on aboutit facilement à une précision de l'ordre de 30 mètres pour la localisation du mobile. Dans l'invention, d'une manière préférée on cherchera à augmenter le taux de modulation. De ce point de vue l'invention est plus particulièrement destinée au codage de type CDMA.

La figure 5 montre par exemple les taux de bits émis selon un tel codage. On a représenté ici deux bits à un suivis de trois bits à zéro et trois bits à un. Indépendamment des temps de propagation, ces trains de bits peuvent être reçus à des dates retardées de 0, δ1, δ2 ou δ3 du fait des réflexions. Selon le cas le niveau reçu est faible, moyen, moyen puis à nouveau faible. Dans les faits ces propagations selon quatre trajets différents aboutissent ensemble au destinataire. Celui-ci reçoit donc la somme des signaux représentés. Pour effectuer le décodage, avec un récepteur en râteau, on effectue une corrélation par addition du train de bit reçu avec des trains de bits reçus décalés de δ1, de δ2 et de δ3.

Pour une séquence d'entraînement connue, il est par ailleurs possible d'effectuer une corrélation, par multiplication, de la séquence reçue avec la séquence théorique attendue. Ce faisant on est capable avec un décodeur de ce type non seulement de retrouver le message émis mais en plus de connaître, malgré son atténuation, la première représentation globale de ce message émis et qui est représentative de la distance minimale : du trajet direct. C'est la raison pour laquelle le codage de type CDMA, qui permet l'utilisation des décodeurs en râteau, est préférée.

Plutôt que de faire effectuer tous les calculs de localisation par le mobile, il est possible de demander au mobile de transmettre des informations correspondant à D1, D2, D3 et D4 à la station de base BTS1 pour que celle-ci calcule, ou fasse calculer par le circuit 2, la localisation recherchée.

Si on ne dispose que d'un nombre limité de stations de base et si les distances mesurées, tenant compte des erreurs de mesure acceptables ne conduisent pas à l'élaboration d'une localisation commune, on produira une localisation assortie d'une information de fiabilité. L'information de fiabilité correspondra par exemple à un rapport d'une distance mesurée moyenne à une distance théorique obtenable.

Plutôt que d'envoyer une information r relative à la durée de retard R, on pourra préférer faire envoyer par le téléphone mobile une séquence d'entraînement connue de la station de base, de façon à ce que celle-ci puisse décoder correctement et retrouver sans difficulté la date H'1 de réception du message en retour.

Lors du deuxième envoi de la station de base BTSI au téléphone mobile, on a prévu que celle-ci indique une deuxième heure absolue H4 sous la forme d'une information h4. Dans ces conditions, le téléphone mobile connaît les informations h1 et h4 ainsi que les dates de réception D1 et D4. Il peut alors connaître, en plus du décalage, la dérive de son horloge interne par rapport à son horloge absolue. Cette dérive est une erreur au second ordre par rapport au décalage A. Elle permet aussi de tenir compte des déplacements du téléphone mobile entre les deux dates D1 et D4 (ou H1 et H4). Cependant, compte tenu de la rapidité avec laquelle seront effectuées les différentes émissions (en pratique tout se passe en environ 100 millisecondes), cette dérive d'horloge sera essentiellement représentative de la dérive du calage de l'horloge du téléphone mobile 4.

En variante, plutôt que de faire connaître par le bus 1 l'horloge absolue du circuit 2 aux différentes stations BTSI à BTS3, on peut utiliser le téléphone mobile lui-même comme moyen d'échange. Dans ce cas, celui-ci établira avec chacune des stations de base BTS1 à BTS3 (ou BTSi), un protocole d'échange aller-retour comme celui décrit pour la station de base BTS1. Dans ce cas, le téléphone mobile 4 finira par savoir quels sont les horloges des différentes stations de base. Ceci reviendra à lui faire connaître une horloge absolue commune à ces stations de base et le décalage des horloges de ces stations de base par rapport à cette horloge absolue valable pour toutes les stations de base. Dans ce cas le téléphone mobile sera capable de calculer un $\Delta1$, un $\Delta2$ et un $\Delta3$ par rapport à son horloge propre. Cette horloge propre, dite horloge relative jusqu'à présent devient alors l'horloge absolue du système, au moins en ce qui concerne la mesure de distance. Dans ce dernier cas, compte tenu de ce que le téléphone mobile 4 peut avoir à converser avec une station de base éloignée, on peut choisir de neutraliser au moins provisoirement une limitation de puissance optimale de façon à ce que les émissions du téléphone mobile atteignent dans de bonnes conditions les stations de base BTS2 et BTS3 plus éloignées.

**Revendications**

1. Procédé de localisation d'un téléphone mobile dans un réseau de stations de base comportant les étapes suivantes:

   - on repère (x1, x2, x3) une première (BTS1), une deuxième (BTS2) et une troisième (BTS3) station de base,
   - on mesure respectivement une première ($\tau1$), une deuxième ($\tau2$) et une troisième ($\tau3$) durée de propagation entre la première, la deuxième et la troisième station de base et le téléphone mobile,
   - on en déduit des distances (d1, d2, d3) entre cette première, cette deuxième et cette troisième station de base et le téléphone mobile, et
   - on localise (X, Y, Z) le téléphone mobile avec ces distances et avec ces repères des stations de base,

   caractérisé en ce que

   - on fait (8, 1) connaître une même horloge absolue pour caler les stations de base,
   - la première station de base envoie (9) une première information h1 de date absolue au téléphone mobile, cette première information h1 correspondant à une première date absolue H1 pour cette première station de base,
   - le téléphone mobile reçoit (10) cette première information h1 de date absolue et émet, après une durée d'attente (R) connue de la première station de base, un signal de réponse (r),
   - la première station de base reçoit (11) ce signal de réponse à une autre date H'1 absolue,
   - la première station de base calcule une information de propagation $\tau1$ entre elle et le mobile sur la base de la différence des deux dates absolues H1 et H'1 et de la durée connue d'attente,
   - la première station de base envoie au téléphone mobile l'information de propagation $\tau1$,
   - la deuxième et la troisième station de base envoient une deuxième et une troisième information h2 et h3 de date absolue, et
   - on localise (12) le mobile à partir de ces informations h1, h2, h3 de date absolue reçues par le téléphone mobile, de leur date (D1, D2, D3) de réception, et de l'information de propagation.

2. Procédé selon la revendication 1, caractérisé en ce que le calcul de localisation du mobile est effectué (26) par le téléphone mobile.

3. Procédé selon la revendication 2 caractérisé en ce que

   - le téléphone mobile envoie (27), éventuellement sur requête, sa position calculée à une station de base.

4. Procédé selon l'une des revendications 1 ou 3, caractérisé en ce que le calcul de localisation du mobile est effectué par un circuit (2) attaché à une station de base.

5. Procédé selon l'une des revendications 1 ou 4, caractérisé en ce que

   - on modifie la vitesse de modulation des informations transmises (CDMA) par les stations de base et/ou le téléphone mobile pour améliorer la précision.

6. Procédé selon l'une des revendications 1 à 5, caractérisé en ce que

- on fait envoyer des informations de date absolues par des autres (BTS4, BTSi) stations de base que par les trois premières stations de base, et

- on localise précisément le téléphone mobile par une méthode des moindres carrés.

**7.** Procédé selon l'une des revendications 1 à 6, caractérisé en ce que

- on mesure un degré de fiabilité de la localisation.

**8.** Procédé selon l'une des revendications 1 à 7, caractérisé en ce que le signal de réponse comporte comme information une séquence connue de la station de base.

**9.** Procédé selon l'une des revendications 1 à 8, caractérisé en ce que

- le protocole de communication entre la station de base et le téléphone mobile est de type CDMA et en ce que

- on retrouve par un récepteur en râteau le trajet de propagation le plus court entre une station de base et le téléphone mobile.

**10.** Procédé selon l'une des revendications 1 à 9, caractérisé en ce que la première station de base envoie au téléphone mobile, avec l'information de propagation $\tau$ d'une quatrième information h4 de date absolue.

**11.** Procédé selon l'une des revendications 1 à 10, caractérisé en ce que

- on envoie l'heure absolue petit à petit (h1, h'1) et/ou

- on envoie les informations d'heure absolue sur un canal de signalisation (BCCH).

**12.** Procédé selon l'une des revendications 1 à 11, caractérisé en ce que

- pour faire connaître, on relie entre elles les différentes stations de base par une liaison (MIC), ou

- on relie les stations de base à un système de type GPS (SAT).

**13.** Procédé selon l'une des revendications 1 à 12, caractérisé en ce que

- on réitère les mesures d'information de propagation avec les autres stations de base pour faire connaître par le téléphone mobile une horloge absolue commune et éventuellement on supprime provisoirement une optimisation de puissance.

**Fig. 1**

**Fig. 4**

**Fig. 5**

$-\delta 1$

$-\delta 2$

$-\delta 3$

```
                    ┌──────────────┐
                    │ -H1          │      9
                    │ -Envoi h1    │  ╱
                    └──────────────┘
                           │                         14
  ┌──────────────┐   ┌ ─ ─ ─ ─ ─ ─ ─┐    ╱        ┌──────────────┐
  │ -H2          │     -Envoi        │             │ -H3          │
  │ -Envoi h2    │   │ x1, y1, z1    │             │ -Envoi h3    │──┐
  └──────────────┘   └ ─ ─ ─ ─ ─ ─ ─┘              └─│────────────┘  │
         │                  │        10               │ -Envoi h4    │
  ┌ ─ ─ ─ ─ ─ ─ ─ ┐  ┌──────────────┐  ╱             │ ─ ─ ─ ─ ─ ─ ─ │
    -Envoi x2, y2, z2│ -Réception h1 │               │ -Envoi hi    │
  └ ─ ─ ─ ─ ─ ─ ─ ┘  │ -Pré-calage H1│               └──────────────┘
         ╲           │ -Attente R    │                      │
          15         │ -Envoi r      │                       16
                     └──────────────┘              ┌ ─ ─ ─ ─ ─ ─ ─ ─ ┐  ╱
                            │                         -Envoi x3, y3, z3│
                            │        11             │                  │
                     ┌──────────────┐  ╱              -Envoi x4, y4, z4│
                     │ -Réception r │               │ ─ ─ ─ ─ ─ ─ ─ ─ │
                     │ -Calcul τ1   │                                  │
                     │ -Envoi τ1    │               │ -Envoi xi, yi, zi│
                     └──────────────┘               └ ─ ─ ─ ─ ─ ─ ─ ─ ┘
         │                  │                               │
         └──────────┐  ┌────┴─────┐  ┌──────────────────────┘
                    │  │          │  │
              ┌──────────────────────┐
              │ -Réception τ1        │
              │ -Calage H1/D1        │
              │ -Réception h2, h3    │        12
              │ ─ ─ ─ ─ ─ ─ ─ ─ ─    │  ╱
              │ - Réception hi       │
              └──────────────────────┘
                         │
              ┌──────────────────────┐
              │ -Calcul de Position  │    13
              │      XYZ             │ ╱
              └──────────────────────┘
                         │
                                        27
              ┌──────────────────────┐ ╱
              │ -Envoi de position   │
              └──────────────────────┘
```

# Fig. 2

Fig. 3

EP 0 979 019 A1

Office européen
des brevets

# RAPPORT DE RECHERCHE EUROPEENNE

Numéro de la demande

EP 99 40 1923

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 800 319 A (HEWLETT PACKARD CO) 8 octobre 1997 (1997-10-08) | 1,4,8, 11,12 | H04Q7/38 |
| A | * colonne 5, ligne 6 – colonne 9, ligne 56 * | 2,3,6,9, 10,13 | |
| | --- | | |
| A | WO 98 19488 A (KALLIOJAERVI KARI ;NOKIA TELECOMMUNICATIONS OY (FI)) 7 mai 1998 (1998-05-07) * page 5, ligne 8 – page 10, ligne 21 * | 1-6,9 | |

**DOMAINES TECHNIQUES RECHERCHES (Int.Cl.7)**

H04Q

Le présent rapport a été établi pour toutes les revendications

| Lieu de la recherche | Date d'achèvement de la recherche | Examinateur |
|---|---|---|
| LA HAYE | 9 novembre 1999 | Maalismaa, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**  EP 99 40 1923

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

09–11–1999

| Document brevet cité au rapport de recherche | Date de publication | Membre(s) de la famille de brevet(s) | | Date de publication |
|---|---|---|---|---|
| EP 0800319 A | 08–10–1997 | AUCUN | | |
| WO 9819488 A | 07–05–1998 | FI | 964353 A | 30–04–1998 |
| | | AU | 4784397 A | 22–05–1998 |
| | | EP | 0937368 A | 25–08–1999 |
| | | NO | 992047 A | 28–06–1999 |

EPO FORM P0460